# EUROPEAN PATENT SPECIFICATION

(11) **EP 1 847 582 B1**
(45) Date of publication and mention of the grant of the patent: **14.09.2011**
(21) Application number: 07104091.9
(22) Date of filing: 14.03.2007
(51) Int. Cl.: C09K 11/77, G01T 1/20, G21K 4/00, C25D 11/08, C25D 11/24

(54) **Radiation image phosphor or scintillator panel.**
Strahlungsbildleuchtstoff oder Szintillationsbildschirm
Matériau luminescent pour l'enregistrement d'une image obtenue par rayonnement ou panneau scintillant

(30) Priority: 20.04.2006 EP 06112799; 20.04.2006 EP 06112797; 20.04.2006 EP 06112798; 20.04.2006 EP 06112800
(43) Date of publication of application: 24.10.2007
(73) Proprietor: AGFA-GEVAERT, 2640 Mortsel (BE)
(72) Inventor: Tahon, Jean-Pierre, 2640, Mortsel (BE); Leblans, Paul, 2640, Mortsel (BE); Uyttendaele, Carlo, 2640, Mortsel (BE)

(56) References cited:
- EP-A- 0 567 178
- EP-A- 1 236 815
- EP-A- 1 541 333
- US-A- 5 315 103
- US-A1- 2005 003 295
- YAFFE B: "SEALING OF ANODIZED ALUMINUM-A REVIEW" METAL FINISHING, ELSEVIER, NEW YORK, NY, US, vol. 88, no. 5, 1 May 1990 (1990-05-01), pages 41-45, XP000132882 ISSN: 0026-0576
- LAWRENCE J. DURNEY: "Electroplating Engeneering Handbook" 1984, VAN NOSTRAND REINHOLD COMPANY INC. , NEW YORK , XP002393083 * page 396 - page 410 *

## Description

### FIELD OF THE INVENTION

The present invention is related with a binderless radiation image screen or panel provided with a vapor deposited phosphor or scintillator layer upon an anodised aluminum support, wherein said panel shows less "pittings" or a "lower pitting degree", due to aluminum corrosion, with an acceptable adhesiveness of the phosphor or scintillator layer onto said anodised aluminum support.

### BACKGROUND OF THE INVENTION

Radiation image recording systems wherein a radiation image is recorded on a phosphor or scintillator screen by exposing the screen to image-wise modulated penetrating radiation are widely used nowadays.

In the case of storage phosphor screens a recorded image is reproduced by stimulating an exposed photostimulable phosphor screen by means of stimulating radiation and by detecting the light that is emitted by the phosphor screen upon stimulation and converting the detected light into an electrical signal representation of the radiation image.

In several applications as e.g. in mammography, sharpness of the image is a very critical parameter. Sharpness of an image that has been read out of a photostimulable phosphor screen not only depends on the sharpness and resolution of the screen itself but also on the resolution obtained by the read-out system which is used.
In conventional read out systems used nowadays a scanning unit of the flying spot type is commonly used. Such a scanning unit comprises a source of stimulating radiation, e.g. a laser light source, means for deflecting light emitted by the laser so as to form a scanning line on the photostimulable phosphor screen and optical means for focusing the laser beam onto the screen.

Examples of such systems are the Agfa Diagnostic Systems, denominated by the trade name ADC 70 and Agfa Compact. In these systems photostimulable phosphor screens which comprise a BaFBr:Eu phosphor are commonly used.

The resolution of the read-out apparatus is mainly determined by the spot size of the laser beam. This spot size in its turn depends on the characteristics of the optical light focusing arrangement. It has been recognised that optimizing the resolution of a scanning system may result in loss of optical collection efficiency of the focussing optics. As a consequence an important fraction of the laser light is not focused onto the image screen. A severe prejudice exists against the use of systems having an optical collection efficiency of the focusing optics which is less than 50% because these systems were expected not to deliver an adequate amount of power to the screen in order to read out this screen to a sufficient extent within an acceptable scanning time. A solution has therefor been sought and found as disclosed in US-A 6,501,088. Therein use has been made of a method for reading a radiation image that has been stored in a photostimulable phosphor screen comprising the steps of scanning said screen by means of stimulating radiation emitted by a laser source, detecting light emitted by said screen upon stimulation, converting detected light into an electrical signal representation of said radiation image, wherein said photostimulable phosphor screen comprises a divalent europium activated cesium halide phosphor wherein said halide is at least one of chloride and bromide and said laser beam is focused so that the spot diameter of the laser spot emitted by said laser, measured between 1/e² points of the gaussian profile of said laser beam is smaller than 100 µm. Object of that invention to provide a method and a system for reading a radiation image that has been stored in a photostimulable phosphor screen was resulting, besides in a method and a system for reading a radiation image stored in a photostimu-lable phosphor screen having a needle-shaped storage phosphor layer, in a method and system yielding a high sharpness.

In US-A 2004/0149929 a radiation image storage panel has been disclosed, composed of a support, a phosphor matrix compound layer covering a surface of the support at a coverage percentage of 95% or more, and a stimulable phosphor layer (which is composed of multiple prismatic stimulable phosphor crystals standing on the phosphor matrix compound layer) formed on the phosphor matrix compound layer, thereby providing a high peel resistance between the support and the stimulable phosphor layer, a high sensitivity, and a reproduced radiation image of high quality.

However, in a radiation image transformation panel, in order to attain the desired radiation absorbing power the needle shaped europium doped cesium halide storage phosphor must be formed in a layer having a thickness of about 200-800 µm. Since the parent compound of the photostimulable phosphor consisting of alkali halide compound, such as CsBr, has a large thermal expansion coefficient of about 50x10⁻⁶/°K, cracks may appear in such a relatively thick layer so that adhesion of the storage phosphor layer onto the support substrate may become a problem, leading to delamination. Factors having a negative influence onto cracking and delamination are related, besides with substrate temperature and changes thereof during the vapor deposition process, with the pressure of inert gas in the vacuum chamber and with presence of impurities, which have a significant influence upon crystallinity of the deposited phosphor layer during said vapor deposition process. In order to solve that problem, a solution has been proposed in JP-A 2005-156411. In that application a first vapor deposited layer was formed onto the substrate, wherein said layer was containing an alkali halide compound with a molecular weight smaller than the parent compound of the photostimulable phosphor. The layer with the vapor deposited stimulable europium doped cesium halide phosphor was further deposited thereupon. Nevertheless as a first layer between substrate and storage phosphor layer is a vapor deposited layer again, same problems were met with respect to cracks and delamination and the expected improvement with respect thereto was not yet fully obtained.

In US-A 6,870,167 a process for the preparation of a radiation image storage panel having a phosphor layer which comprises a phosphor comprising a matrix component and an activator component, which comprises the steps of: forming on a substrate a lower prismatic crystalline layer comprising the matrix component by vapor deposition, and forming on the lower prismatic crystalline layer an upper prismatic crystalline layer comprising the matrix component and the activator component by vapor deposition as an arrangement favourable for crystallinity of said upper layer. In favour of adhesion however it has been proposed in US-Application 2005/51736 to make use of spherical shaped phosphors in the lower layer.

When performing vapor deposition techniques in order to prepare phosphor layers onto dedicate substrates, a highly desired substrate material whereupon the scintillator or phosphor material should be deposited is made of glass, a ceramic material, a polymeric material or a metal. As a metal base material use is generally made of metal sheets of aluminum, steel, brass, titanium and copper. Particularly preferred as a substrate is aluminum as a very good heat-conducting material allowing a perfect homogeneous temperature, not only over the whole substrate surface but also in the thickness direction: such heat conductivities are in the range from 0.05-0.5 W/(m·K).

Since completely pure aluminum is not easily produced from a point of view of a refining technology, aluminum supports containing other elements in the aluminum alloy like silicon, iron, manganese, copper, magnesium, chromium, zinc, bismuth, nickel and titanium have been used as described in US-A's 3,787,249 and 3,720,508, wherein, as in automotive applications, bright anodised aluminum alloys having appearance somewhat similar to buffed stainless steels or to chrome-plated brass are much more economical to the user. Said alloys have markedly improved resistance to oxidation in the temperature range of 440° to 500°C which results in improved surface appearance after hot rolling and are tolerant to a broader range of solution composition in which they can be bright dipped. Alloys described in US-A 4,235,682 further exhibit substantially improved brightness after anodizing in sulphuric acid and sealing.

It should be noted however that in order to perform vapor deposition of two vapor deposited layers as has e.g. been described in US-A's 6,870,167 and 6,967,339, or in US-Application 2005/0077479 two different processes in a vapor depositing apparatus are required in order to deposit different raw starting materials in each layer: as it is known that increased dopant amounts in the upper layer lead to a desired higher sensitivity of the storage phosphor screen thus formed, it can be expected that higher dopant amounts lead to enhanced cracking and decreased adhesion of the coated layers. Otherwise in order to have better reflection properties in favour of reflection of light emitted upon stimulation of the storage phosphors and, as a consequence thereof, an enhanced sensitivity, it can be expected that a more mirror-like smoother support surface is not in favour of a better adhesion of phosphor layers, deposited thereupon.

The US-Application 2005/0003295 discloses further a radiation image phosphor or scintillator panel comprising an aluminum support having an anodised aluminum layer wherein chromium is present in the anodized layer and a vapour deposited phosphor or scintillator layer comprising needle-shaped phosphor or scintillator crystals which can be covered with a protective coating.

Besides a good compromise between roughness, speed, cracking and adhesion, it is clear that lowering of number of corrosion pittings or "pitting degree" in the support layer due to the agressive vapor deposition process of the phosphor or scintillator onto the aluminum support is envisaged.

### SUMMARY OF THE INVENTION

Although being hitherto favourable with respect to adhesion characteristics of vapor deposited phosphor or scintillator layers having a thickness of 100 µm up to 1000 µm thereupon, as causing no undesired "cracks" or delamination of scintillator or phosphor "flakes" when prepared in a vapor deposition apparatus in optimised conditions, it is a main object of the present invention to avoid corrosion of the supporting layer, which occurs as a consequence of vapor deposition of phosphor layers in agressive conditions of high temperature and low pressure, wherein such corrosion becomes visible in form of "pittings" in flat field phosphor panels after a thermal treatment of 1 week at a temperature of 30°C and a relative humidity RH of 80%.

Moreover it is an object of the present invention to maintain an acceptable adhesion between support and phosphor layer, even when making use of smoother supports, providing sensitivity enhancing reflection properties.

The above-mentioned advantageous effects have been realised by providing a storage phosphor panel having the specific features set out in claim 1. Specific features for preferred embodiments of the invention are set out in the dependent claims.

It has been found now that, in favour of less corrosion and acceptable adhesion between support layer and vapor deposited phosphor or scintillator layers, a radiation image phosphor or scintillator panel comprising as a layer arrangement of consecutive layers an anodised aluminum support layer and a phosphor or scintillator layer comprising needle-shaped phosphor or scintillator crystals covered with a protective coating, provided that chromium is present in said aluminum layer and/or said anodised layer, is characterised in that the said anodised aluminum support layer has a ratio of average surface roughness Rₐ versus anodised layer thickness of at least 0.001. More in particular it has been found that such a panel wherein a ratio Rₐ/t of less than 0.001 is measured, is favourable with respect to corrosion, but suffers from lack of adhesion, whereas a panel wherein a ratio of 0.30 or more is measured, is favourable with respect to adhesion, but shows undesired corrosion pittings.

More particular embodiments of the phosphor or scintillator panels according to the present invention are as follows:
- an average surface roughness Rₐ is in the range from 0.01 µm to less than 0.30 µm;
- an average surface roughness Rₐ is in the range from 0.01 µm to 0.20 µm;
- said average surface roughness Rₐ is in the range from 0.01 µm to 0.10 µm;
- said average surface roughness Rₐ is in the range from 0.01 µm to 0.05 µm;
- said anodised layer thickness is in the range from 1 µm to 10 µm;
- said anodised layer thickness is in the range from 1 µm to 5 µm;
- magnesium is present in said aluminum layer in an amount in the range from 1 wt% to 5 wt% versus aluminum, i.e. about 3 wt%;
- chromium should necessarily be present in said aluminum layer and/or said anodised aluminum layer;
- said phosphor layer comprises needle-shaped phosphor crystals having an alkali metal halide as a matrix compound and a lanthanide as an activator compound;
- said needle-shaped phosphor is a photostimulable CsBr:Eu phosphor, more particularly a binderless CsBr:Eu phosphor, and even more particularly a binderless vapour deposited CsBr:Eu phosphor.

With respect to the meaning of roughness Rₐ it should be taken in mind that Rₐ has been registered by means of a perthometer and measured according to DIN4768 as an arithmetic average value of the departures of the roughness profile from the mean level line within an assessment length L, wherein the surface of the planes above and under the line are integrated in order to calculate said roughness Rₐ value.

The term "flat field" should be understood as "uniformly exposed", i.e. exposed with a constant intensity and with a homogeneous energy distribution in order to avoid "phantoms". In a standard procedure use is made therefor from RQA 5 (International Electrotechnical Commission - IEC61267:1994) beam quality.

Further advantages and particular embodiments of the present invention will become apparent from the following description, without however limiting the invention thereto.

### DETAILED DESCRIPTION OF THE INVENTION

According to the present invention a radiation image phosphor or scintillator panel comprising, as a layer arrangement of consecutive layers, an anodised aluminum support layer and a phosphor or scintillator layer comprising needle-shaped phosphor or scintillator crystals, covered with a protective coating, is characterised in that a ratio of average surface roughness 'Rₐ' versus anodised layer thickness 't' is at least 0.001, wherein Rₐ is in the range from 0.01 µm to less than 0.30 µm and wherein said anodised layer has a thickness in the range from 1 µm to 10 µm, provided that chromium is present in said aluminum layer and/or said anodised layer.

In another embodiment according to the present invention said ratio is in the range from 0.005 to less than 0.30, and even in the range from 0.01 to less than 0.30.

The present invention thus relates to the formation of a surface layer on aluminum and aluminum alloy surfaces in order to render such surfaces permanently receptive to subsequent coatings. Because of the weight of aluminum and its corrosion characteristics, aluminum and alloys therewith are increasingly utilised in commercial, industrial and consumer areas in conjunction with coatings, inorganic and organic as well.

In order to protect the surface of the aluminum support against further corrosion due to inorganic alkali halide salts, especially when vapor deposition of a phosphor layer at high temperatures is performed as a process providing high phosphor packing densities, preferably in the range from 60% to 90%, it has been found now that, according to the present invention, an anodised aluminum layer having a surface layer with a ratio of average surface roughness Rₐ versus anodised layer thickness of at least 0.001, in another embodiment in the range from 0.005 to 0.30, and even 0.01 to 0.30 is in favour of good adhesion between said phosphor layer and said support, the more when, according to the present invention an average surface roughness Rₐ is in the range from 0.01 µm to less than 0.30 µm, wherein said anodised layer has a thickness in the range from 1 µm to 10 µm. In another embodiment, according to the present invention said average surface roughness Rₐ should be in the range from 0.01 µm to 0.20 µm, in a more narrow range from 0.01 µm to 0.10 µm and even, in a most narrow range, from from 0.01 µm to 0.05 µm.

Good adhesion, as a result of such measures within the scope of the present invention, should be understood here as absence, or, at least, decreased tendency of cracking and, as a consequence thereof, less tendency to delamination and vice versa.

Such a roughness 'Rₐ' is calculated from a roughness profile of the anodised aluminum support layer as registered by means of a perthometer, known as most commonly used technique, and is calculated according to DIN 4768 as already mentioned hereinbefore.

In the radiation image panel according to the present invention, said anodised layer thickness is in the range from 1 µm to 10 µm, in another embodiment in the range from 1 µm to 5 µm, and in still another embodiment said anodised layer thickness is even in the range from 1 µm to 3 µm.

Typical aluminum supports for use in accordance with the present invention are thus made of at most 99 % aluminum or of an aluminum alloy, the aluminum content of which is at least 95%. Suitable for use in the method of the present invention are well-known aluminum substrates, brightened anodised aluminum, anodised aluminum with an aluminum mirror and an oxide package, provided that the conditions with respect to the surface characteristics of the substrate support in the panel according to the present invention as claimed are fulfilled. Depending on its thickness,it is clear that the panel may be more or less flexible. If a more flexible support is required, measures taken as described in published US-Application 2005/0003295 may be applied. Such an anodised aluminum support may have a thickness in the range of from 50 µm to 3 mm, inasmuch as allowed by the scanning apparatus wherein the panel should be read-out. In one embodiment according to the present invention said anodised aluminum support has a thickness of up to at most 1000 µm.

With respect to the aluminum support material, it is clear that various grades of aluminum may be used. In one embodiment according to the present invention, magnesium is present in an amount in the range from 1% to 5% by weight. The aluminum may optionally be heat-treated in order to control hardness and may be grained and anodised. Various graining techniques may be applied, such as brush graining and chemical graining, but electrochemical graining in acid solution is preferred. Graining acids may include, for example, hydrochloric acid or nitric acid, or preferably, a mixture of hydrochloric acid and acetic acid. After graining, the aluminum may be anodised in, for example, phosphoric acid, or, more preferably, sulphuric acid. Optionally, the aluminum may also be cleaned prior to graining by treatment with, for example, sodium hydroxide, and prior to anodizing by treatment with, e.g., phosphoric acid. It may be preferable that, after graining and anodizing, the aluminum substrate should comply with the specifications set out in EP-A 0 278 766, in terms of a relationship between the anodic weight and the surface roughness, measured as indicated hereinbefore and applied as in the examples hereinafter. As a particularly preferred support a lithographic aluminum support is electrochemically grained and anodised. The said aluminum is preferably grained by electrochemical graining, and anodised by means of anodizing techniques employing an oxalic acid solution, phosphoric acid or a sulphuric acid solution or mixtures thereof. Methods of both graining and anodisation of aluminum are very well known in the art and may advantageously be applied to the supports of the present invention. Anodizing may be accomplished using the electrolytes and process control parameters necessary to develop anodic coatings of, although not limited thereto, chromic, sulphuric, and modified sulphuric acid types followed by immediate water rinse. For a discussion of cleaning and finishing aluminum and aluminum alloys, there is referred to Metals Handbook, 8th Ed. (1964), Vol. 2, published by American Society for Metals, pp. 611-634.

By graining (or roughening) the aluminum support, both adhesion and wetting characteristics are improved in lithographic applications. By varying the type and/or concentration of the electrolyte and the applied voltage in the graining step, different type of grains may be obtained. Anodic oxide coatings established upon aluminum or aluminum alloy substrates for various purposes as, e.g., in order to improve resistance to corrosion and abrasion, are formed by various conventional methods. For example, the anodic coating may be formed by anodizing (passing electric current through the treating solution with the substrate being coated serving as an anode) in an acid medium such as a sulphuric acid solution or a sulphuric acid containing a sulfophthalic acid solution according to well known procedures. In most current commercial practice, direct-current anodizing in a sulphuric acid-based electrolyte has substantially replaced most other anodizing processes for the production of thick, clear, porous-type anodic oxide coatings, because of its efficiency in consumption of electrical current as compared with earlier alternating current processes. In general, direct current anodizing voltages employed for sulphuric acid-based electrolytes range from 12 to 22 volts, depending upon the strength and temperature of the acid. Typically in sulphuric acid anodizing, the electrolyte contains 15-20 wt% sulphuric acid at a temperature of 20°C and a voltage of 17-18 V. Sulphuric acid-based electrolytes include mixtures of sulfuric acid with other acids, such as oxalic acid and sulphamic acid, in which the anodizing characteristics are broadly determined by the sulphuric acid content. The microstructure as well as the thickness of the Al₂O₃ layer are determined by the anodizing step, wherein the anodic weight in g/m² of Al₂O₃ formed on the aluminum surface usually varies between 1 and 8 g/m². Grained and anodised aluminum supports may be post-treated in order to improve the hydrophilic properties of its surface. So e.g. the aluminum oxide surface may be silicated by treating its surface with a sodium silicate solution at an elevated temperature as e.g. at 95°C. Alternatively, a phosphate treatment may be applied which involves treating the aluminum oxide surface with a phosphate solution that may further contain an inorganic fluoride. Moreover the aluminum oxide surface may be rinsed with an organic acid and/or salt thereof, e.g. carboxylic acids, hydrocarboxylic acids, sulphonic acids or phosphonic acids, or their salts, e.g. succinates, phosphates, phosphonates, sulphates, and sulphonates. A citric acid or citrate solution may be preferable. This treatment may be carried out at room temperature or may be carried out at a slightly elevated temperature of about 30°C to 50°C.

A further interesting treatment may involve rinsing the aluminum oxide surface with a bicarbonate solution. Still further, the aluminum oxide surface may be treated with polyvinyl phosphonic acid, polyvinyl methyl phosphonic acid, phosphoric acid esters of polyvinyl alcohol, polyvinyl sulfonic acid, polyvinylbenzene sulfonic acid, sulfuric acid esters of polyvinyl alcohol, and acetals of polyvinyl alcohols formed by reaction with a sulfonated aliphatic aldehyde. It is further evident that one or more of these post treatments may be carried out alone or in combination. More details about these treatments can be found in GB 1084070, DE 4423140, DE 4417907, EP-A 659909, EP-A 537633, DE 4001466, EP-A 292801 and EP-A 291760 and US-A's 4,458,005 and 4,769,549.

As explained in US-A 6,901,687 although several electrolytes, known to the skilled person, may be used to apply a dense intermediate layer of aluminum oxide in the electrochemical treatment, an electrolyte advantageously used comprises a solution of oxalic acid or sulphuric acid or a mixture thereof. Combination of the above-mentioned anodised layers leads to very good results. First phosphoric acid anodizing is used in order in order to obtain a porous oxide that ensures a good adhesion of a sol-gel coating therein, wherein a typical thickness for such a porous layer in the range from 1 µm to 5 µm is strived at. Next step is the application of oxalic acid anodizing. Also sulphuric acid or a mixture of oxalic acid and sulphuric acid may be used. In this process step a hard and dense oxide layer is applied in between the aluminum substrate and the phosphoric acid anodised layer.

Such intervening drastic changes are applied at least at one, and may be applied at both sides of the support. In a preferred embodiment it is applied at one side of the support sheet material, and in a most preferred embodiment, it is applied at the side at which the phosphor becomes evaporated. In other cases however the surface structure of the back side is changed by e.g. application of etching procedures as has been described in US-A 2005/0003295. According to the present invention the said roughness referred to, is thus applied on at least one side of said sheet, web or panel.

Roughening of an aluminum foil can be performed according to the methods well known in the prior art. So the surface of the aluminum substrate can be roughened (etched) in a structured or textured way either by mechanical, chemical, optical or electrochemical graining or by a combination thereof. Mechanical graining can be performed by e.g. sand blasting, ball graining, wire graining, brush graining, slurry graining or a combination of these. Mechanical etching procedures thus refer to indentation procedures, wherein grooves are cut into the metal web, sheet, or foil. An etching resolution for relief patterns between grooves or pits is normally in the range of some micrometers. In another embodiment mechanical etching of the surface substrate comprising aluminum may be carried out by wet brushing as in US-A's 5,775,977 and 5,860,184, wherein use is made of a cylinder brush in which brush rows having bundles of organic fibers and metal wires are arranged side by side on the surface and wherein the suspension used for the wet brushing contains abrasive particles in water. Alternatively, as disclosed in US-A 6,273,784, there may be provided at least one of a moving device for moving a graining brush in the width direction of aluminum web and a turning device for turning the graining brush so that the graining brush can be placed obliquely against a transporting direction of the aluminum web. By moving the graining brush periodically in the width direction of the aluminum web, the entire graining brush uniformly comes into contact with the aluminum web. By turning the graining brush to place it obliquely against the transporting direction of the aluminum web, the entire graining brush can always come into contact with the aluminum web. Accordingly, the abrasion in the bristles of the graining brush is maintained uniform. Chemical graining may be done e.g. by alkaline etching with a saturated aqueous solution of an aluminum salt of a mineral acid. Chemical etching may proceed as described in DE-A-2251382 wherein a process for etching an aluminum foil has been described consisting of an alkaline etching by means of a 10% aqueous sodium hydroxyde solution followed by an acidic etching by means of a 20% nitric acid solution. Otherwise the method described in EP-A 0 709 232 may be applied, said method comprising the steps of roughening an aluminum foil and subsequently anodizing said aluminum foil wherein after the roughening and before the anodisation said aluminum foil is etched with an alkaline solution comprising strong alkali and subsequently with an acidic solution comprising strong acid. Although the alkaline etching may be quite agressive it may advantageously be applied in combination with the previously mentioned mechanical etching technique or with the techniques mentioned hereinafter. Suitable alkali for use in aqueous etching solutions are inorganic strong alkali, strong alkali being alkali with a pKa of at least 13. Examples of particularly suitable alkali are e.g. NaOH, KOH or mixtures thereof.
Salts of a strong alkali and a weak acid may also be used in admixture with strong alkali as e.g. sodium gluconate. The total amount of alkali in such an aqueous etching solution may range e.g. from 4 g/l to 50 g/l. Chemical etching times with the mentioned alkaline solutions are preferable in the range of a few seconds up to several minutes, and more preferably between 2-5 s and 4-5 min. Suitable acids for use in the aqueous acidic etching solution are preferably strong inorganic acids, strong acids being acids with a pKa of at most 1. Examples of acids that are particularly suitable are e.g. H₂SO₄, H₂Cr₂O₇, HCl, HNO₃, HF, H₃PO₄ or mixtures thereof. Weak acids may also be used in admixture with strong acids. The total amount of acid in the aqueous acidic etching solution may be at least 200 g/l and more preferably at least 250 g/l. Chemical etching times are preferable in the range of a few seconds up to several minutes, and more preferably between 2-5 s and 4-5 min. Between etching with an alkaline solution and etching with an acidic solution the aluminum foil is advantageously rinsed with demineralised water. Photo-etching is a further well-known and useful technique within the scope of the present invention, in that it is obtained by depositing a photoresist pattern on a metal base and then etching away the parts, not covered by the photoresist pattern, with the aid of an chemical etchant. When applying this technique, the "etching factor" is defined as the ratio between the final etching depth and the length of lateral etching under a photoresist pattern and is, in general equal to 1.5, i.e. an etching of approximately 10 µm also occurs in the lateral direction for an etching of 15 µm in the depth direction. Double-sided etching of support substrates may advantageously be such that two patterns are obtained by etching, each of the patterns extending from one side of the material over a part of the thickness of the support material. Organic additives which are normally used in electrolytic baths have the property that they influence the etching rate and may be useful therefor. A number of suitable additives of this type is mentioned in the book entitled "Modern Electroplating", 3rd edition, 1973, published by John Wiley & Son Incorporated, pages 296 et seq..

Electrochemical graining may be advantageously used as a suitable technique because it provides a uniform surface roughness over a large surface area with a very fine and even grain as is commonly desired. In order to obtain a finely grained surface topography the concentration and temperature of the electrolytic solution, the current form and density should be optimised. Electrochemical graining is preferably conducted in a hydrochloric and/or nitric acid containing electrolyte solution while using an alternating or a direct current. Other aqueous solutions that can be used in the electrochemical graining are e.g. acids like HNO₃, H₂SO₄, H₃PO₄, optionally containing, in addition, one or more corrosion inhibitors such as Al(NO₃)₃, AlCl₃, boric acid, chromic acid, sulfates, chlorides, nitrates, monoamines, diamines, aldehydes, phosphates and H₂O₂, without being limitative.

Next, the coating layer is usually washed with water and subsequently boiled in boiling water for about 1 hour. As a result, the above porous aluminum oxide is expanded by incorporating crystallisation water in order to get a coating layer comprising dense crystals. This operation is the so-called sealing treatment. Different types of sealing of the porous anodised aluminum surface exist. Preferably, said posttreatment is performed by treating a grained and anodised aluminum support with an aqueous solution containing a bicarbonate as disclosed in EP-A 0 567 178.

After the sealing treatment, heat treatment may be carried out, preferably at 250°C or higher, whereby the above aluminum oxide having crystallisation water will lose said water to be shrinked to form a pattern of layer fractions in fine island shapes, surrounded and separated from each other by the gaps formed by the cracks due to shrinkage. The aluminum oxide coating thus obtained should preferably have a thickness of some micrometers or more and, in the case of a thin coating, since the layer fractions tend to become greater, it is advised to optimally select the conditions for the step of anodic oxidation. As the support having a surface structure like a large number of fine tiles surrounded by fine gaps as described above, a support of an anodically oxidised aluminum plate applied with sealing treatment and, subsequently, with heat treatment, is preferred. Such a production method may advantageously be applied as has e.g. been performed in US-A 4,769,549. In order to accelerate the sealing process, sealing accelerators have been developed, which, when added directly to the sealing bath, accelerate the sealing process. Thus it is known that the sealing process may be accelerated by the addition of accelerators directly to the hot water sealing bath. Such accelerators are usually mildly basic substances which raise the alkalinity of the sealing bath to a value in the range of pH 7 to 11. So US-A's 3,365,377 and 3,822,156 disclose the addition of triethanolamine to hot water sealing baths to accelerate sealing. Porous anodisation of aluminum or aluminum alloys may be carried out in an electrolyte containing an acid, such as sulphuric acid, phosphoric acid, chromic or oxalic acid, which slowly dissolves or attacks the oxide of the anodic film and forms open pores which extend inwardly from the outer surface of the anodic film. After formation of the porous film, the film may be sealed, if desired, by placing the film in a bath of boiling water to hydrate and expand surface oxide layers, thus closing the open ends of the pores. So as in EP-A 0 368 470 from Alcan, a method of depositing a layer of a finish metal on substrates of anodisable metals may be applied which comprises the steps of anodizing the substrate at the said surface to produce a porous anodised layer of thickness from about 0.5 µm to about 50 µm and having pores therein of transverse dimension from about 0.005 µm to 0.10 µm, depositing a pore-filling metal into the pores using AC or modified AC deposition to completely fill the pores with the metal up to the surface of the anodised layer, and continuing the deposition of the pore-filling metal to form a continuous support layer on the surface of the anodised layer of thickness in the range about 0.5 to 3 µm, further depositing at least one coating of a finish metal on the support layer.
The method is particularly useful for plating finish coatings of chromium on aluminum and its alloys. Porous anodisation of a metal substrate made of aluminum or an anodisable aluminum alloy may also be performed as has been described in US-A 5,218,472 wherein use is made of an electrolyte containing an acid (phosphoric acid, sulfuric acid, oxalic acid, etc.) for a time suitable to grow a porous anodic film of the desired (optically thin) thickness. Low temperature vapor sealing of anodised aluminum may further be applied as in US-A 4,103,048. In order to protect aluminum and aluminum alloys sealing anodic coatings on aluminum and alloys of aluminum may be applied as has been described in US-A 4,310,390. Simultaneously impregnating the anodic coating with organic resin during the sealing operation, thereby provides a protective coating to the anodised aluminum having superior corrosion resistance. A specified water-borne resin coating material possessing excellent stability at temperatures in excess of 80°C may be used to convert the unsealed anodic coating to the monohydrate/trihydrate form of aluminum oxide during the sealing step of an otherwise conventional aluminum anodizing process. Subsequently, the sealed anodic film may be cured at temperatures up to 245°C. This process thus provides a total protection system having characteristics superior to separately sealed and organically primed aluminum obtained through conventional processing. The foregoing describes a typical processing sequence which follows the conventional steps of preparing and anodizing the aluminum substrate. Such preparation for anodizing thus includes (a) degreasing, (b) alkaline cleaning, and (c) deoxidizing with intermediate water rinsing after each of the operations (a), (b) and (c). As a consequence of previously described treatments of anodised aluminum supports with an acid as chromic acid, more particularly in the anodizing step and/or in the post anodic treatment step (sealing step) it is clear that in the present invention the radiation image phosphor or scintillator panel has chromium present in its aluminum layer and/or anodised aluminum layer. This means that chromium, whether or not present in the aluminum metal bulk is, in one embodiment, present or enriched (if already present in the bulk aluminum material) in the anodised aluminum layer.

As another post anodic treatment spraying e.g. a polyvinyl pyrrolidone solution onto the anodised aluminum surface may be provided. Further polishing steps are not exluded in the preparation method of anodised aluminum surface layers.

According to the present invention, said stimulable phosphor layer comprises needle-shaped phosphor crystals having an alkali metal halide as a matrix or base compound and a lanthanide as an activator or dopant compound.

In a particular embodiment according to the present invention, said needle-shaped stimulable phosphor is a CsBr:Eu phosphor.

A photostimulable CsBr:Eu phosphor in form of needles, selected from a viewpoint of high sensitivity and high sharpness, is advantageously provided with amounts of Eu as an activator or dopant, in the range from 0.0001 to 0.01 mole/mole of CsBr, and more preferably from 0.0003 to 0.005 mole/mole. In the case of a stimulable CsBr:Eu phosphor, the europium compound of the evaporation source preferably may start from a divalent europium Eu²⁺ compound and a trivalent Eu³⁺ compound: said europium compound may be EuBrₓ in which x satisfies the condition of 2.0 < x < 2.3, wherein a europium compound containing the divalent europium compound as much as possible, i.e. at least 70%, is desired.

Although the thickness of the phosphor layer changes with the sensitivity class of the photostimulable phosphor, it is desirable to deposit a phosphor layer having a thickness from 100 µm to 1000 µm, more preferable from 200 µm to 800 µm, and still more preferable from 300 µm to 700 µm. Too thin a phosphor layer causes too little absorbed amounts of radiation, an increased transparency, and a deteriorated image quality of the obtained radiation image, whereas too thick a phosphor layer will cause image quality to decrease, due to a lowered sharpness.

In a particular embodiment according to the present invention, the radiation image phosphor or scintillator panel further comprises a sublayer between said anodised layer and said phosphor or scintillator layer, wherein said sublayer comprises an inorganic compound and in that said sublayer has a thickness in the range from 0.1 µm to 2.5 µm. More in particular, in the radiation image phosphor or scintillator panel according to the present invention, said inorganic compound is a metal compound or a metal oxide compound, wherein said metal is selected from the group consisting of tin, copper, nickel, chromium, scandium, yttrium, tantalum, vanadium, titanium, niobium, cobalt, zirconium, molybdene and tungsten.

In another particular embodiment according to the present invention the radiation image phosphor or scintillator panel further comprises a precoat layer consisting of an organic polymer layer having a thickness in the range from 4 µm to 15 µm when said polymer is selected from the group consisting of cellyte, poly-acrylate, poly-methyl-methacrylate, poly-methylacrylate, polystyrene, polystyrene-acrylonitrile, polyurethane, hexafunctional polyacrylate, poly-vinylidene-difluoride, epoxy functionalized polymers and a poly-p-xylylene polymer; and wherein said precoat layer has a thickness in the range from 1 µm to less than 5 µm when said polymer is an organo-silane based polymer.

In a still further particular embodiment, in said radiation image phosphor or scintillator panel according to the present invention, said sublayer is further overcoated with an organic precoat layer.

Such an organic precoat layer, situated between sublayer and phosphor or scintillator layer, according to the present invention, comprises an organic polymer compound selected from the group consisting of cellyte, poly-acrylate, poly-methyl-methacrylate, poly-methylacrylate, polystyrene, polystyrene-acrylonitrile, polyurethane, hexafunctional polyacrylate, poly-vinylidene-difluoride, epoxy functionalized polymers and poly-p-xylylene. Combinations of compatible organic polymers in said organic precoat layer are not excluded.

In a method of preparing a radiation image storage panel according to the present invention, said phosphor layer is coated onto the sublayer or precoat layer or layers described above by a technique selected from the group consisting of physical vapor deposition, chemical vapor deposition and an atomisation technique. As an atomisation technique, electron beam vaporisation can be used, as has e.g. been described in US-A's 6,740,897 and 6,875,990 and in US-Applications 2002/050570, 2004/075062 and 2004/149931. In the electron beam evaporation technique, an electron beam generated by an electron gun is applied onto the evaporation source and an accelerating voltage of electron beam preferably is in the range of 1.5 kV to 5.0 kV. By applying the electron beam technique, the evaporation source of matrix component and activator element is heated, vaporised, and deposited on the substrate. Physical vapor deposition techniques as suitable for use in the deposition of binderless needle-shaped crystals in the phosphor layer of the present invention, such as resistive heating, sputtering and RF induction techniques. Resistive heating vacuum deposition, may advantageously be applied as has been described e.g. in US-A's 6,720,026; 6,730,243 and 6,802,991 and in US-Application 2001/007352. This technique is recommended as a method in order to vapor deposit the needle-shaped binderless storage phosphors for a panel according to the present invention. In the resistance heating evaporation, the evaporation sources are heated by supplying electrical energy to the resistance heating means: crucible or boat configurations - preferably composed of refractory materials - in a vapor deposition apparatus, in order to practically realise a homogeneous deposit of vapor deposited phosphor material may be applied as has e.g. been disclosed in US-Applications 2005/000411, 2005/000447 and 2005/217567.

Vapor deposition in a vacuum deposition apparatus requires adjustment of a predetermined degree of vacuum. For a binderless needle-shaped storage phosphor layer in a panel according to the present invention, formation of said phosphor under a high vacuum is desirable: the degree of vacuum of 1 x 10⁻⁵ to 5 Pa, and, more specifically, from 1 x 10⁻² to 2 Pa is desired, wherein an inert gas, such as an Ar or Ne noble gas, or alternatively, an inert gas as nitrogen gas, may be introduced into the vacuum deposition apparatus. Evacuation to give an even lower inner pressure of 1 x 10⁻⁵ to 1 x 10⁻² Pa is more preferred for electron beam evaporation. Introduction of oxygen or hydrogen gas may be advantageously performed, more particularly in order to enhance reactivity and/or e.g. in an annealing step. Introduction of an inert gas can moreover be performed in favour of cooling the vapor stream before deposition onto the substrate and/or the substrate, whereupon phosphor vapor raw materials should be deposited as disclosed in US-A 6,720,026. Alternatively one side of the support may be heated while the other side may be cooled while performing vapor deposition as disclosed in US-A 7,029,836.

The deposition rate generally is in the range of 0.1 to 1,000 µm/min., preferably in the range of 1 to 100 µm/min. It is not excluded to perform a pretreatment to the support, coated with the sublayer as in the present invention: in favour of an enforced drying step, the layer arrangement before phosphor deposition is held at a high temperature during a defined time. It is even not excluded to increase the percentage of relative humidity until the surface of the sublayer starts hydrating, in order to get a smooth base for the phosphor layer. Efficient deposition of the storage phosphor layer onto the substrate however, requires temperatures for the substrate in the range from 50°C to 250°C as has been disclosed in US-Application 2004/081750. Heating or cooling the substrate during the deposition process may thus be steered and controlled as required.

Phosphor raw materials comprising matrix and activator compounds are advantageously present as precursors in form of powders or tablets. Examples of phosphor precursor materials useful in the context of the present invention have been described in US-Applications 2005/184250, 2005/184271 and 2005/186,329. Evaporation may be performed from one or more crucibles. In the presence of more than one crucible, an independent vaporisation control may be performed in favour of uniformity, homogeneity and/or dedicated incorporation of activator or dopant. This is more particularly preferred when differences in vapor pressure between matrix and activator compound are significant, as is the case e.g. for CsBr and EuOBr or EuBrₓ in which x satisfies the condition of 2.0 < x < 2.3.

Average amounts of Europium dopant incorporated in the needle-shaped CsBr:Eu crystals are in the range from 150 to 750 µmol/mol, and more preferably in the range from 200 to 600 µmol/mol.

The formed phosphor layer comprises prismatic, needle-shaped stimulable phosphor crystals which are aligned almost perpendicularly to the substrate. The thus formed phosphor layer only comprises the stimulable phosphor, without presence of a binder, and there are produced cracks extending the depth direction in the phosphor layer. In favour of image quality, especially sharpness, the needle-shaped phosphor layer may advantageously be coloured with a colourant which does not absorb the stimulated emission but the stimulating rays as has e.g. been described in US-A 6,977,385.

After the deposition procedure is complete, the deposited layer is preferably subjected to heat treatment, also called "annealing", which is carried out generally at a temperature of 100 to 300° C. for 0.5 to 3 hours, preferably at a temperature of 150 to 250°C for 0.5 to 2 hours, under inert gas atmosphere which may contain a small amount of oxygen gas or hydrogen gas. Annealing procedures may be applied as described in US-A 6,730,243; 6,815,692 and 6,852,357 or in US-Applications 2004/0131767, 2004/0188634, 2005/0040340 and 2005/0077477.

The layer arrangement of the screens or panels, consisting of a dedicated support whereupon a phosphor or scintillator layer is deposited as disclosed in the present invention is further advantageously protected with a protective coating at the side of the phosphor or scintillator layer. A transparent protective film coating on the surface of the stimulable phosphor layer is advantageously applied in order to ensure good handling of the radiation image storage panel in transportation steps and in order to avoid deterioration and damaging. Chemically stable, physically strong, and of high moisture proof coatings are advantageously provided by overcoating the phosphor or scintillator layer with a solution in which an organic polymer (e.g., cellulose derivatives, polymethyl methacrylate, fluororesins soluble in organic solvents) is dissolved in a solvent, by placing a sheet prepared beforehand for the protective film (e.g., a film of organic polymer such as polyethylene terephthalate, a transparent glass plate) on the phosphor film with an adhesive, or by depositing vapor of inorganic compounds on the phosphor film. Protective layers may thus be composed of materials such as a cellulose acetate, nitrocellulose, polymethyl-methacrylate, polyvinyl-butyral, polyvinyl-formal, polycarbonate, polyester, polyethylene terephthalate, polyethylene, polyvinylidene chloride, nylon, polytetrafluoroethylene and tetrafluoroethylene-6 fluoride propylene copolymer, a vinylidene-chloride-vinyl chloride copolymer, and a vinylidene-chloride-acrylonitrile copolymer. A transparent glass support may also be used as a protective coating layer. Moreover, by vacuum deposition, making use e.g. of the sputtering technique, a protective coating of SiC, SiO2, SiN, and Al₂O₃ grade may be formed. Various additives may be dispersed in the protective film coating. Examples of the additives include light-scattering fine particles (e.g., particles of magnesium oxide, zinc oxide, titanium dioxide and alumina), a slipping agent (e.g., powders of perfluoroolefin resin and silicone resin) and a cross-linking agent (e.g. polyisocyanate). Preferred thicknesses of protective layers are in the range from 1 µm up to 20 µm for polymer coatings and even up to 2000 µm in case of inorganic materials as e.g. silicate glass. For enhancing the resistance to stain, a fluororesin layer is preferably provided on the protective film coating. Fluororesin layers may be formed by coating the surface of the protective film with a solution in which a fluororesin is dissolved or dispersed in an organic solvent, and drying the coated solution. The fluororesin may be used singly, but a mixture of the fluororesin and a film-forming resin may be employed. In the mixture, an oligomer having polysiloxane structure or perfluoroalkyl group may be added furtheron. In the fluororesin layer, a fine particle filler may be incorporated to reduce blotches caused by interference and to improve the quality of the resultant image. The thickness of the fluororesin layer is generally in the range of 0.5 to 20 µm. For forming such a fluororesin layer, additives such as a cross-linking agent, a film-hardening agent and an anti-yellowing agent may be used. In particular, the crosslinking agent is advantageously employed to improve durability of the fluororesin layer. In order to further improve the sharpness of the resultant image in a storage phosphor panel with a photostimulable phosphor, at least one layer may be coloured with a colourant which does not absorb the stimulated emission, normally emitted in the wavelength range from 300 to 500 nm, but effectively absorbs the stimulating radiation in the wavelength range from 400 to 900 nm.

In another embodiment heating the phosphor plate in an organic solvent gas and sealing the phosphor plate with a moisture-proof protective film in order to prepare the radiation image storage panel as in published US-Application 2006/0049370 may be applied.

Further embodiments of protective layer coatings suitable to be applied can be found in US-A's 6,710,356; 6,800,362; 6,822,243; 6,844,056; 6,864,491 and 6,984,829 and in US-Applications 2004/0164251, 2005/0067584, 2004/0183029, 2004/0228963,2005/0104009, 2005/0121621, 2005/0139783, 2005/0211917, 2005/0218340, 2006/0027752 and 2006/0060792, without however being limitative.

### Examples

While the present invention will hereinafter in the examples be described in connection with preferred embodiments thereof, it will be understood that it is not intended to limit the invention to those embodiments.

### Example 1

With respect to the support aluminum layer, magnesium was absent in pure Al comparative plate CB73804, as well as in the inventive plates CB74319 and 74322.

Opposite thereto magnesium in the aluminum layer support was present in an amount of 3 wt% in the 3 inventive plates (CB73805 - CB73807 and CB73812).

Following treatments were performed in order to provide the aluminum support with a surface having an anodised layer, suitable to be covered with a vapor deposited phosphor layer of CsBr:Eu as needle-shaped, photostimulable phosphor.

The bare aluminum plate was first "degreased" during about 5 seconds with a sodium hydroxide solution at 70°C in order to get a clean surface, free from contamination by e.g. oil, dust, and other undesired contaminants. In a second step "graining" of the aluminum support was performed by an A.C. current in hydrogen chloride (alternatively in nitric acid). In order to remove aluminum hydroxide formed during the graining step, a "desmutting" neutralizing step was applied wherein the aluminum plate was sprayed with sulphuric acid (alternatively phosphoric acid) during a time of about 5 seconds at 70°C. The "anodizing step" was performed by application of a D.C. (direct current) in sulphuric acid (alternatively: dichromic acid - exact circumstances given in Table 1 hereinafter).

The said anodisation treatment was providing an anodised layer having a thickness 't' of 1 µm or more.

Roughness 'Rₐ'-values, expressed in µm, were calculated as mentioned above after having registered the surface roughness profile with a perthometer. Samples were scanned therefor with a Dektak-8 Stylus Profiler and the values were calculated as described in DIN-4768.

The thickness 't' of the anodised layer was determined from SEM images (scanning electron microscopic photographs).

Ratios of roughness values 'Rₐ' and anodisation layer thicknesses 't' were calculated.

CsBr:Eu photostimulable phosphor screens were prepared on anodised aluminum plates, prepared as indicated hereinbefore, in a vacuum chamber by means of a thermal vapor deposition process, starting from a mixture of CsBr and EuOBr as raw materials. Said deposition process onto said anodised aluminum supports was performed in such a way that said support was rotating over the vapor stream. An electrically heated oven and a refractory tray or boat were used, in which 160-200 g of a mixture of CsBr and EuOBr as raw materials in a 99.5%/0.5% CsBr/EuOBr percentage ratio by weight were present as raw materials to become vaporised.

As a crucible an elongated boat having a length of 100 mm was used, having a width of 35 mm and a side wall height of 45 mm composed of "tantalum" having a thickness of 0.5 mm, composed of 3 integrated parts: a crucible container, a "second" plate with slits and small openings and a cover with slit outlet. The longitudinal parts were fold from one continuous tantalum base plate in order to overcome leakage and the head parts are welded. Said second plate was mounted internally in the crucible at a distance from the outermost cover plate which was less than 2/3 of said side wall height of 45 mm.

Under vacuum pressure (a pressure of 2 x 10⁻¹ Pa equivalent with 2 x 10⁻³ mbar) maintained by a continuous inlet of argon gas into the vacuum chamber, and at a sufficiently high temperature of the vapor source (760°C) the obtained vapor was directed towards the moving sheet support and was deposited thereupon successively while said support was rotating over the vapor stream. Said temperature of the vapor source was measured by means of thermocouples present outside and pressed under the bottom of said crucible and by tantalum protected thermocouples present in the crucible.
The anodised aluminum support having a thickness of 800 µm, a width of 10 cm and a length of 10 cm, was positioned at the side whereupon the phosphor should be deposited at a distance of 22 cm between substrate and crucible vapor outlet slit.

Plates were taken out of the vapor deposition apparatus after having run same vapor deposition times, leading to phosphor plates having phosphor layers of about equal thicknesses. No further intermediate layer was thus present between anodised support layer and needle-shaped phosphor layer.

A protective sheet was further coated and the adhesive strength of the phosphor layer onto the anodised aluminum support was further tested. In each case it was clear that the adhesiveness of the protective coating onto the phosphor layer was at least as strong as the adhesiveness of the phosphor layer onto the anodised aluminum support for each phosphor screen.

Data about coating weight of the phosphor, relative speed (fresh and after conditioning) and sharpness have been set out in the Table 2, wherein relative speed (SAL%) is defined as the speed of each of the screens compared with the reference speed of an MD10^{®} reference photostimulable phosphor screen manufactured by Agfa-Gevaert, Mortsel, Belgium.

Adhesion of the layers was evaluated during handling of the rigid aluminum plates, i.e. during at least one of following steps: (1) removing the vapor deposited phosphor plate from vacuum chamber in the vapor depositing apparatus; (2) application of identification means to the plate (e.g. by inscription); (3) testing of the plate (e.g. testing its behavior in a conditioning room at well-defined temperature and humidity conditions).

Figure "4" therein was considered to be indicative for a "bad" adhesion;
figure "3" was related with "critical" adhesion of the reference plate (not completely satisfying - causing adhesion problems more than once);
figure "2" was indicative for a "better" adhesion (acceptable, occasionally - rarely - showing an adhesion problem) and
figure "1" was indicative for "good" adhesion (no delamination ever observed between support and phosphor layer while handling the rigid aluminum plates as described hereinbefore).

Corrosion was evaluated visually on a "flat field" (equally exposed by X-rays as defined hereinbefore) coated needle image storage phosphor plate and expressed as "number of pittings per 100 square cm", i.e. per full plate (10 cm x 10 cm).

**Table 1**

| Plate CB No. | Mg wt% | Anodization; sealing | Anodised layer 't' | Roughness 'Rₐ' (µm) | Pittings /100 cm² | Ratio Rₐ/t | Adh (*) |
|---|---|---|---|---|---|---|---|
| 73804 (comp) | 0 | H₂SO₄; H₂O sealed | 1 µm | 0.673 | > 100 | 0.67 | 2 |
| 73805 | 3 | H₂SO₄; H₂O sealed | 20 µm | 0.487 | 50 | 0.024 | 3 |
| 73807 | 3 | H₂Cr₂O_{7;} H₂O sealed | 5 µm | 0.378 | 20 | 0.076 | 3 |
| 73812 | 3 | H₂Cr₂O_{7;} H₂Cr₂O₇ sealed | 5 µm | 0.340 | 17 | 0.068 | 2 |
| 74319 | 0 | H₂SO₄; H₂O sealed | 1.8 µm | 0.05 | 50 | 0.028 | 3-4 |
| 74322 | 0 | H₂Cr₂O_{7;} H₂Cr₂O₇, sealed | 5 µm | 0.05 | 15 | 0.01 | 1-2 |

| | | | | | | | |
|---|---|---|---|---|---|---|---|
| (*) 1 = excellent; 2 = good; 3 = acceptable; 4 = bad | | | | | | | |

From the results in Table 1, it becomes clear that excellent results with respect to corrosion, for an acceptable adhesion, can be obtained for the inventive panels as exemplified. As can be concluded from these results summarised in the Table 1, even for thin anodised layers having a reduced roughness degree (Rₐ=0.05; t=5µm; ratio Rₐ/t=0.01), as e.g. for the plate CB74322, an excellent adhesion is obtained while no (large) pittings appear, provided that the anodised layer contains chromium (Cr) as a consequence of anodisation and/or sealing in dichromic acid solutions.

It is moreover concluded that an aluminum support containing magnesium, with an anodised layer having a layer thickness 't' of about 5 µm and an average surface roughness 'Rₐ' of about 0.3, thus having a ratio of average roughness of said surface layer and anodised layer thickness of said aluminum support of about 0.06 - 0.07, offers good results with respect to an improved corrosion resistance, thereby showing a lower "pitting degree", with acceptable adhesion properties when coated with a vapor deposited CsBr:Eu layer, more particularly, when the anodised layer contains chromium (Cr) as a consequence of anodisation and/or sealing in dichromic acid solutions.

Table 2 provides figures about speeds and speed decreases for a time of one week, respectively even 30 days, in severe conditions exceeding room temperature (even 30°C), in a high relative humidity (80% RH): CB73812 and CB74322 clearly perform better if compared with comparable plates CB73807 and CB74319 respectively.

From the results in Table 2 hereinafter, it is concluded that it is remarkable that in a method according to the present invention of preparing a radiation image phosphor or scintillator panel having as consecutive layers on an aluminum support an anodised aluminum surface layer, a vapor deposited phosphor layer comprising needle-shaped phosphor or scintillator crystals and a protective layer coating, wherein, in a first preparation step said aluminum support is treated with an anodizing treatment step - wherein an anodised layer having a thickness in the range from 1 µm to 10 µm is formed, followed by a sealing step, that for a surface roughness Rₐ of said anodised aluminum surface layer in the range from 0.01 µm to less than 0.30 µm, even up to 0.20 µm, and, more in particular even in the range from 0.01 µm than 0.05 µm, as an advantageous effect of the present invention, absence of (large) pittings and a very good adhesion is found for the phosphor layer onto the aluminum support, provided that said aluminum support is treated with a solution containing a chromium compound in at least one of said steps.

**Table 2**

| Plate No. | Phosphor coating wt. (mg/cm²) | Speed or sensitivity | Speed after 7 days 30°C/80% RH | Speed after 30 days 30°C/80% RH |
|---|---|---|---|---|
| CB73804 | 42.2 | 124 | 85 | - |
| CB73805 | 42.0 | 52 | 22 | - |
| CB73507 | 41.9 | 97 | 46 | - |
| CB73512 | 41.9 | 110 | 62 | - |
| CB74319 | 49.1 | 225 | - | 34 |
| CB74322 | 48.7 | 202 | - | 46 |

### Example 2

An aluminum layer support having magnesium in an amount of 3 wt% in all of the plates (i.e. CB73805 - CB73863 and CB73823), except for plate CB73872 (no Mg in aluminum support). CB73805 stands for a comparative panel without any precoat layer.

Anodization treatment was performed in order to get an anodized layer: besides said treatment, a thickness thereof, expressed in µm, has been given hereinafter in the Table 3.

Presence of "Parylene C"^{®} as precoat layer (inventive plates CB73863 and CB73823) or organic silane coating (inventive plate CB73872), or absence of a precoat layer as in comparative plate CB73805 onto the anodized aluminum support has been indicated by its thickness (in µm) as set out in Table 3.

CsBr:Eu photostimulable phosphor screens were prepared as described in Example 1 hereinbefore.

Plates were taken out of the vapor deposition apparatus after having run same vapor deposition times, leading to phosphor plates having phosphor layers of about equal thicknesses.

A protective sheet was further coated and the adhesive strength of the phosphor layer onto the anodized aluminum support was further tested. In each case it was clear that the adhesiveness of the protective coating onto the phosphor layer was at least as strong as the adhesiveness of the phosphor layer onto the anodized aluminum support for each phosphor screen.

Data about coating weight of the phosphor, relative speed (fresh and after conditioning) have been set out in the Table 4, wherein relative speed (SAL%) is defined again as the speed of each of the screens compared with the reference speed of an MD10^{®} reference photostimulable phosphor screen manufactured by Agfa-Gevaert, Mortsel, Belgium. Adhesion of the layers was evaluated during handling of the rigid aluminum plates as indicated in Example 1, and the same significance was given to the figures "1" to "4" as hereinbefore.

From adhesion tests as described above, it was clear that all of the inventive plates were showing a good to excellent adhesion, whereas for the comparative plate CB73805 adhesiveness was just acceptable.

**Table 3**

| Plate No. | Anodization & sealing | Thickness anodized layer | Mg wt % | Organic precoat layer thickness | Organic precoat layer compound | Adhesion control (*) |
|---|---|---|---|---|---|---|
| CB73805 | H₂SO₄ anod.; H₂O sealing | > 20 µm | 3 | 0 | - | 3 |
| CB73863 | H₂SO₄ anod.; H₂O sealing | > 20 µm | 3 | 4 µm | Par.C | 2 |
| CB73872 | H₂SO₄ anod.; H₂O sealing | 1 µm | 0 | < 5 µm | Org.Sil. | 1 |
| CB73823 | H₂SO₄ anod.; H₂O sealing | > 20 µm | 3 | 4 µm | Par.C | 1-2 |

| | | | | | | |
|---|---|---|---|---|---|---|
| (*) Adhesion: 1=excellent; 2=good; 3=acceptable; 4=bad | | | | | | |

Even with a very thin anodized layer as for CB73872, a good adhesion could be attained in the presence of a thin organo silane-based precoat, having a thickness of less than 5 µm.

**Table 4**

| Plate No. | Phosphor coating wt. (mg/cm²) | Speed or sensitivity | Speed after 7 days 20°C/80% RH |
|---|---|---|---|
| CB73805 | 42.0 | 52 | 22 |
| CB73863 | 45.0 | 96 | 27 |
| CB73872 | 45.6 | 154 | 63 |
| CB73823 | 43.9 | 86 | 13 |

Table 4 is illustrative for the excellent speed, acceptable speed decrease in severe conditions of high relative humidity during a time of one week, and sharpness at 1 line pair per mm, more particularly for inventive storage phosphor plate CB73872 having a thin organotetrasilane coating.

### Example 3

Anodization treatment was performed in this Example in order to get an anodized layer having a thickness of 5 µm. Coating weight of phosphor was set at about 50 mg/cm² (48.0; 51.7 and 49.8 resp. for the CB-plates 72721, 72724 and 72723 respectively).

**Table 5**

| Plate No. | Anodization; sealing | Substrate name | Precoat thickn. | Corrosion evaluation | Mg | SAL % |
|---|---|---|---|---|---|---|
| CB72721 | H₂SO₄ anod.; H₂O sealing | P51 | 0 | 4 | 0 | 143 |
| CB72724 | H₂SO₄ anod.; H₂O sealing | P51 | 4 µm | 2 | 0 | 139 |
| CB72723 | H₂SO₄ anod.; H₂O sealing | N61 | 0 | 4 | 0 | 144 |

| | | | | | | |
|---|---|---|---|---|---|---|
| Corrosion evaluation: 1=excellent; 2=good; 3=acceptable; 4=bad | | | | | | |

Presence of a PARYLENE C^{®} layer as a substrate or intermediate layer between the anodized Al support clearly provides an adequate corrosion protection as can be observed from absence of disturbing pittings on the "flat field": the term "flat field" should be understood herein as "uniformly exposed", i.e. exposed with a constant intensity and with a homogeneous energy distribution in order to avoid "phantoms".

In a standard procedure use is made therefor from RQA 5 (International Electrotechnical Commission - IEC61267:1994)beam quality.

Moreover a good adhesion between support and phosphor layer is observed as envisaged, wherein said adhesion is controlled while "handling" as defined hereinbefore.

### Example 4

Magnesium in the aluminum layer support was present in an amount of 3 wt% in comparative plate CB73805 and in inventive plate CB73865. Mg was absent in the pure Al containing comparative support plate CB73804 and in inventive support plate CB73803.

Anodization treatment was performed in order to get an anodized layer having a thickness 't' as indicated in Table 6 hereinafter. Treatment conditions of the anodized layer were performed as indicated in the Table 1 hereinafter.

The bare aluminum plate was first "degreased" during about 5 seconds with a sodium hydroxide solution at 70°C in order to get a clean surface, free from contamination by e.g. oil, dust, and other undesired contaminants.

In a second step "graining" of the aluminum support was performed by an A.C. current in hydrogen chloride (alternatively in nitric acid).

In order to remove aluminum hydroxide formed during the graining step, a "desmutting" neutralizing step was applied wherein the aluminum plate was sprayed with sulphuric acid during a time of about 5 seconds at 70°C. The "anodizing step" was performed by application of a D.C. current in sulphuric acid and was water sealed.

With respect to the meaning of roughness Rₐ of the anodized aluminum layer it should be taken in mind that Rₐ has been measured according to DIN4768 as an arithmetic average value of the departures of the roughness profile from the mean level line within an assessment length L, wherein the surface of the planes above and under the line are integrated in order to calculate said roughness Rₐ value.

Roughness 'Rₐ'-values, expressed in µm, were thus calculated after having registered the surface roughness profile with a perth-o-meter. Samples were scanned therefor with a Dektak-8 Stylus Profiler and the values were calculated as described in DIN-4768.

Corrosion was evaluated on a "flat field" coated needle image plate and expressed as "number of pittings per 100 square cm", i.e. per full plate. The term "flat field" should be understood as "uniformly exposed", i.e. exposed with a constant intensity and with a homogeneous energy distribution in order to avoid "phantoms". In a standard procedure thereof use is made therefor from RQA 5 (International Electrotechnical Commission - IEC61267:1994) beam quality.

No intermediate layer was present between sealed anodized support layer and needle phosphor layer for comparative plates CB73804 and CB73805. For the inventive plates CB73865 and CB73803 an inorganic coating of electrochemically deposited tin (from a tin sulphate solution) and an inorganic coating of yttrium oxide, applied by chemical vapor deposition (CVD), as inorganic sublayers were applied respectively.

As can be concluded from the results summarized in the Table 6 hereinafter, an anodized aluminum support coated with an inorganic layer as is the case for inventive examples CB73865 (coated with a tin metal layer) or CB73803 (coated with an oxide coating of yttrium) provides a clearly better protection against corrosion, if compared with the comparative panels CB73804 and CB73805, without sublayer. Results as obtained in Table 6 are illustrative for reduction of corrosion and a lowering of the degree of pitting. It is moreover clear that presence of magnesium in the aluminum support provides better protection against corrosion, for the inventive as well as for the comparative coatings. Protection with an inorganic coating of less than 10 µm moreover drastically improves the degree of pitting, by lowering it (CB73865).

**Table 6**

| Plate CB No. | Mg in Al | Sublayer | Anodization; sealing | Anodized layer thickness | Roughness 'Rₐ'(µm) | Pittings /100 cm² |
|---|---|---|---|---|---|---|
| 73804 | 0 % | No | H₂SO₄; H₂O seal | 1 µm | 0.671 | > 100 |
| 73805 | 3 % | No | H₂SO₄; H₂O seal | > 20 µm | 0.487 | 50 |
| 73865 | 3 % | Sn | H₂SO₄; H₂O seal | 15 µm | 0.491 | 16 |
| 73803 | 0 % | Y₂O₃ | H₂SO₄; H₂O seal | 1 µm | | 30 |

Table 7 is illustrative for the acceptable speed and speed decrease in severe conditions of high relative humidity during one week, more particularly for the panel wherein a thin oxide coating of yttrium oxide was present as a sublayer between anodized aluminum support and phosphor layer (CB73803).

**Table 7**

| Plate No. | Phosphor coating wt. (mg/cm²) | Sublayer thickness | Speed or sensitivity | Speed after 7 days 20°C/80% RH |
|---|---|---|---|---|
| CB73805 | 42.0 | 0 | 52 | 22 |
| CB73865 | 45.6 | < 10 µm | 109 | 42 |
| CB73803 | 42.2 | 0.45 µm | 114 | 76 |

Having described in detail preferred embodiments of the current invention, it will now be apparent to those skilled in the art that numerous modifications can be made therein without departing from the scope of the invention as defined in the appending claims.

## Claims

1. A radiation image phosphor or scintillator panel comprising as a layer arrangement of consecutive layers, an aluminum support having an anodised layer, wherein chromium is present in said aluminum layer and/or said anodised layer, and a vapor deposited phosphor or scintillator layer comprising needle-shaped phosphor or scintillator crystals thereupon, covered with a protective coating, **characterised in that** said anodised layer has a ratio of average surface roughness 'Rₐ' versus anodised layer thickness 't' of at least 0.001; wherein Rₐ is in the range from 0.01 µm to less than 0.30 µm and wherein said anodised layer has a thickness in the range from 1 µm to 10 µm, Rₐ having been registered by means of a perthometer and measured according to DIN4768 as an arithmetic average value of departures of the roughness profile from the mean level line within an assessment length L, wherein the surface of the planes above and under the line are integrated in order to calculate said toughness Rₐ value.

2. A radiation image phosphor or scintillator panel according to claim 1, wherein the said ratio is in the range from 0.005 to less than 0.30.

3. A radiation image phosphor or scintillator panel according to claim 1, wherein the said ratio is in the range from 0.01 to less than 0.30.

4. A radiation image phosphor or scintillator panel according to any one of the claims 1 to 3, wherein Rₐ is in the range from 0.01 µm to 0.20 µm.

5. A radiation image phosphor or scintillator panel according to any one of the claims 1 to 3, wherein Rₐ is in the range from 0.01 µm to 0.10 µm.

6. A radiation image phosphor or scintillator panel according to any one of the claims 1 to 3, wherein Rₐ is in the range from 0.01 µm to 0.05 µm.

7. A radiation image phosphor or scintillator panel according to any one of the claims 1 to 6, wherein said anodised layer has a thickness in the range from 1 µm to 5 µm.

8. A radiation image phosphor or scintillator panel according to any one of the claims 1 to 7, wherein in said anodised layer magnesium is present in an amount in the range from 1 wt% to 5 wt% versus aluminum.

9. A radiation image phosphor or scintillator panel according to any one of the claims 1 to 8, further comprising a sublayer between said anodised layer and said phosphor or scintillator layer, wherein said sublayer comprises an inorganic compound and wherein said sublayer has a thickness in the range from 0.1 µm to 2.5 µm.

10. A radiation image phosphor or scintillator panel according to claim 9, wherein said inorganic compound is a metal compound or a metal oxide compound, wherein said metal is selected from the group consisting of tin, copper, nickel, chromium, scandium, yttrium, tantalum, vanadium, titanium, niobium, cobalt, zirconium, molybdene and tungsten.

11. A radiation image phosphor or scintillator panel according to any one of the claims 1 to 8, comprising a precoat layer consisting of an organic polymer layer having a thickness in the range from 4 µm to 15 µm when said polymer is selected from the group consisting of cellyte, poly-acrylate, poly-methyl-methacrylate, polymethylacrylate, polystyrene, polystyrene-acrylonitrile, polyurethane, hexafunctional polyacrylate, poly-vinylidene-difluoride, epoxy functionalized polymers and poly-p-xylylene; and wherein said precoat layer has a thickness in the range from 1 µm to less than 5 µm when said polymer is an organo-silane based polymer.

12. A radiation image phosphor or scintillator panel according to claim 9 or 10, wherein said sublayer is further overcoated with an organic precoat layer.

13. A radiation image phosphor according to any one of the claims 1 to 12, wherein said phosphor layer comprises needle-shaped phosphor crystals having an alkali metal halide as a matrix compound and a lanthanide as an activator compound.

14. A radiation image phosphor according to any one of the claims 1 to 12, wherein said needle-shaped phosphor is a photostimulable CsBr:Eu phosphor.

## Patentansprüche

1. Ein Strahlungsbildleuchtstoffschirm oder -szintillatorschirm, der als Schichtanordnung aufeinanderfolgender Schichten einen mit einer anodisierten Schicht überzogenen Aluminiumträger, wobei die Aluminiumschicht und/oder die anodisierte Schicht Chrom enthält (enthalten), und eine darauf aufgedampfte, nadelförmige Leuchtstoffkristalle oder Szintillatorkristalle enthaltende, mit einer Schutzschicht beschichtete Leuchtstoffschicht oder Szintillatorschicht umfasst, **dadurch gekennzeichnet, dass** die anodisierte Schicht ein Verhältnis des Mittenrauwerts 'Rₐ' der Oberflache der anodisierten Schicht zur Stärke der anodisierten Schicht 't' von mindestens 0,001 aufweist, wobei Rₐ zwischen 0,01 µm und weniger als 0,30 µm liegt und die anodisierte Schicht eine Stärke zwischen 1 µm und 10 µm aufweist, wobei Rₐ mittels eines perthometers erfasst und gemäß DIN4768 als arithmetischer Mittelwert der Abweichungen des Rauheitsprofils von der geraden Mittellinie innerhalb einer Auswertungsstrecke L gemessen wurde, wobei die Oberfläche der Flächen über und unter der Linie zur Berechnung des Rₐ-Rauheitswerts integriert werden.

2. Strahlungsbildleuchtstoffschirm oder -szintillatorschirm nach Anspruch 1, **dadurch gekennzeichnet, dass** das besagte Verhältnis zwischen 0,005 und weniger als 0,30 liegt.

3. Strahlungsbildleuchtstoffschirm oder -szintillatorschirm nach Anspruch 1, **dadurch gekennzeichnet, dass** das besagte Verhältnis zwischen 0,01 und weniger als 0,30 liegt.

4. Strahlungsbildleuchtstoffschirm oder -szintillatorschirm nach einem der Ansprüche 1 bis 3, **dadurch gekennzeichnet, dass** Rₐ zwischen 0,01 µm und 0,20 µm liegt.

5. Strahlungsbildleuchtstoffschirm oder -szintillatorschirm nach einem der Ansprüche 1 bis 3, **dadurch gekennzeichnet, dass** Rₐ zwischen 0,01 µm und 0,10 µm liegt.

6. Strahlungsbildleuchtstoffschirm oder -szintillatorschirm nach einem der Ansprüche 1 bis 3, **dadurch gekennzeichnet, dass** Rₐ zwischen 0,01 µm und 0,05 µm liegt.

7. Strahlungsbildleuchtstoffschirm oder -szintillatorschirm nach einem der Ansprüche 1 bis 6, **dadurch gekennzeichnet, dass** die Stärke der anodisierten Schicht zwischen 1 µm und 5 µm liegt.

8. Strahlungsbildleuchtstoffschirm oder -szintillatorschirm nach einem der Ansprüche 1 bis 7, **dadurch gekennzeichnet, dass** die anodisierte Schicht Magnesium in einer Menge zwischen 1 Gew.-% und 5 Gew.-%, bezogen auf das Aluminium, enthält.

9. Strahlungsbildleuchtstoffschirm oder -szintillatorschirm nach einem der Ansprüche 1 bis 8, der ferner eine zwischen der anodisierten Schicht und der Leuchtstoffschicht oder Szintillatorschicht befindliche Subschicht enthält, **dadurch gekennzeichnet, dass** die Subschicht eine anorganische Verbindung enthält und die Stärke der Subschicht zwischen 0,1 µm und 2,5 µm liegt.

10. Strahlungsbildleuchtstoffschirm oder -szintillatorschirm nach Anspruch 9, **dadurch gekennzeichnet, dass** die anorganische Verbindung eine Metallverbindung oder eine Metalloxidverbindung ist, **dadurch gekennzeichnet, dass** das Metall aus der Gruppe bestehend aus Zinn, Kupfer, Nickel, Chrom, Scandium, Yttrium, Tantal, Vanadium, Titan, Niobium, Kobalt, Zirconium, Molybdän und Wolfram gewählt wird.

11. Strahlungsbildleuchtstoffschirm oder -szintillatorschirm nach einem der Ansprüche 1 bis 8, umfassend eine aus einer Schicht aus organischem Polymer bestehende Vorschicht, die eine Stärke zwischen 4 µm und 15 µm aufweist, wenn das Polymer aus der Gruppe bestehend aus Cellyt, Polyacrylat, Polymethylmethacrylat, Polymethylacrylat, Polystyrol, Polystyrolacrylnitril, Polyurethan, hexafunktionellem Polyacrylat, Polyvinylidendifluorid, epoxyfunktionalisierten Polymeren und Poly-p-xylylen gewählt wird, und wobei die Stärke der Vorschicht zwischen 1 µm und weniger als 5 µm liegt, wenn das Polymer ein Polymer auf Organosilanbasis ist.

12. Strahlungsbildleuchtstoffschirm oder -szintillatorschirm nach Anspruch 9 oder 10, **dadurch gekennzeichnet, dass** die Subschicht ferner mit einer organischen Vorschicht beschichtet ist.

13. Strahlungsbildleuchtstoff nach einem der Ansprüche 1 bis 12, **dadurch gekennzeichnet, dass** die Leuchtstoffschicht nadelförmige Leuchtstoffkristalle mit einem Alkalimetallhalogenid als Matrixverbindung und einem Lanthanoid als Aktivatorverbindung enthält.

14. Strahlungsbildleuchtstoff nach einem der Ansprüche 1 bis 12, **dadurch gekennzeichnet, dass** der nadelförmige Leuchtstoff ein ausleuchtbarer CsBr:Eu-Leuchtstoff ist.

## Revendications

1. Un panneau luminescent ou scintillant pour l'enregistrement d'une image obtenue par rayonnement, ledit panneau comprenant comme système de couches consécutives un support aluminium revêtu d'une couche anodisée, la couche d'aluminium et/ou la couche anodisée contenant du chrome, ainsi qu'une couche luminescente ou scintillante déposée en phase gazeuse sur la couche anodisée, contenant des cristaux de luminophore ou de scintillateur aciculaires et revêtue d'une couche protectrice, **caractérisé en ce que** la couche anodisée présente un rapport de la rugosité superficielle moyenne 'Rₐ' à l'épaisseur de la couche anodisée 't' d'au moins 0,001, la valeur Rₐ étant comprise entre 0,01 µm et moins de 0,30 µm et la couche anodisée présentant une épaisseur comprise entre 1 µm et 10 µm, où l'enregistrement de la valeur Rₐ a été effectuée à l'aide d'un perthomètre et sa mesure a été effectuée selon la norme DIN4768 comme la moyenne arithmétique des écarts du profil de rugosité par rapport à la ligne moyenne droite à l'intérieur d'une longueur d'évaluation L, la surface des aires au-dessus et celle des aires en dessous de la ligne étant intégrées pour le calcul de la rugosité Rₐ.

2. Panneau luminescent ou scintillant pour l'enregistrement d'une image obtenue par rayonnement selon la revendication 1, **caractérisé en ce que** ledit rapport est compris entre 0,005 et moins de 0,30.

3. Panneau luminescent ou scintillant pour l'enregistrement d'une image obtenue par rayonnement selon la revendication 1, **caractérisé en ce que** ledit rapport est compris entre 0,01 et moins de 0,30.

4. Panneau luminescent ou scintillant pour l'enregistrement d'une image obtenue par rayonnement selon l'une quelconque des revendications 1 à 3, **caractérisé en ce que** la valeur Rₐ est comprise entre 0,01 µm et 0,20 µm.

5. Panneau luminescent ou scintillant pour l'enregistrement d'une image obtenue par rayonnement selon l'une quelconque des revendications 1 à 3, **caractérisé en ce que** la valeur Rₐ est comprise entre 0,01 µm et 0,10 µm.

6. Panneau luminescent ou scintillant pour l'enregistrement d'une image obtenue par rayonnement selon l'une quelconque des revendications 1 à 3, **caractérisé en ce que** la valeur Rₐ est comprise entre 0,01 µm et 0,05 µm.

7. Panneau luminescent ou scintillant pour l'enregistrement d'une image obtenue par rayonnement selon l'une quelconque des revendications 1 à 6, **caractérisé en ce que** l'épaisseur de la couche anodisée est comprise entre 1 µm et 5 µm.

8. Panneau luminescent ou scintillant pour l'enregistrement d'une image obtenue par rayonnement selon l'une quelconque des revendications 1 à 7, **caractérisé en ce que** la couche anodisée contient du magnésium dans une quantité comprise entre 1% en poids et 5% en poids par rapport à la quantité d'aluminium.

9. Panneau luminescent ou scintillant pour l'enregistrement d'une image obtenue par rayonnement selon l'une quelconque des revendications 1 à 8, comprenant en outre une sous-couche appliquée entre la couche anodisée et la couche luminescente ou scintillante, **caractérisé en ce que** la sous-couche contient un composé inorganique et que l'épaisseur de la sous-couche est comprise entre 0,1 µm et 2,5 µm.

10. Panneau luminescent ou scintillant pour l'enregistrement d'une image obtenue par rayonnement selon la revendication 9, **caractérisé en ce que** le composé inorganique est un composé de métal ou un composé d'oxyde de métal, **caractérisé en ce que** le métal est choisi parmi le groupe composé d'étain, de cuivre, de nickel, de chrome, de scandium, d'yttrium, de tantale, de vanadium, de titane, de niobium, de cobalt, de zirconium, de molybdène et de tungstène.

11. Panneau luminescent ou scintillant pour l'enregistrement d'une image obtenue par rayonnement selon l'une quelconque des revendications 1 à 8, comprenant une couche préliminaire constituée d'une couche de polymère organique, **caractérisé en ce que** la couche préliminaire présente une épaisseur comprise entre 4 µm et 15 µm si le polymère est choisi parmi le groupe composé de cellyte, de polyacrylate, de polyméthacrylate de méthyle, de polyacrylate de méthyle, de polystyrène, d'acrylonitrile de polystyrène, de polyuréthane, de polyacrylate hexafonctionnel, de difluorure de polyvinylidène, de polymères époxyfonctionnalisés et de poly-p-xylylol, et que la couche préliminaire présente une épaisseur comprise entre 1 µm et moins de 5 µm si le polymère est un polymère à base d'organosilane.

12. Panneau luminescent ou scintillant pour l'enregistrement d'une image obtenue par rayonnement selon la revendication 9 ou 10, **caractérisé en ce que** la sous-couche est en outre revêtue d'une couche préliminaire organique.

13. Luminophore pour l'enregistrement d'une image obtenue par rayonnement selon l'une quelconque des revendications 1 à 12, **caractérisé en ce que** la couche luminescente contient des cristaux de luminophore aciculaires contenant un halogénure de métal alcalin comme composé de matrice et un lanthanide comme composé activateur.

14. luminophore pour l'enregistrement d'une image obtenue par rayonnement selon l'une quelconque des revendications 1 à 12, **caractérisé en ce que** le luminophore aciculaire est un luminophore à base de CsBr:Eu photostimulable.
